(19)

**Europäisches Patentamt**
**European Patent Office**
**Office européen des brevets**

(11) **EP 4 402 766 B1**

(12) **EUROPEAN PATENT SPECIFICATION**

(45) Date of publication and mention
of the grant of the patent:
**06.08.2025  Bulletin 2025/32**

(51) International Patent Classification (IPC):
***H02J 3/46*** *(2006.01)*

(21) Application number: **22776865.2**

(22) Date of filing: **08.09.2022**

(52) Cooperative Patent Classification (CPC):
**H02J 3/46;** H02J 2203/10; H02J 2310/12

(86) International application number:
**PCT/EP2022/025419**

(87) International publication number:
**WO 2023/036467 (16.03.2023 Gazette 2023/11)**

(54) **DEVICE AND METHOD OF MANAGING POWER IN AN AC SUBGRID**

VORRICHTUNG UND VERFAHREN ZUR VERWALTUNG DER LEISTUNG IN EINEM
WECHSELSTROMUNTERNETZ

DISPOSITIF ET PROCÉDÉ DE GESTION DE PUISSANCE DANS UNE SOUS-GRILLE AC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2021  GB 202113034**

(43) Date of publication of application:
**24.07.2024  Bulletin 2024/30**

(73) Proprietor: **Eaton Intelligent Power Limited
Dublin 4, D04 Y0C2 (IE)**

(72) Inventors:
• **KOPEJTKO, Petr**
**19000 Czechia (CZ)**
• **CHUMAK, Oleksij**
**Prague 14200 (CZ)**

(74) Representative: **Jolliffe, Jack Louis et al
Venner Shipley LLP
200 Aldersgate
London EC1A 4HD (GB)**

(56) References cited:
• **ROCABERT J ET AL: "Control of Power
Converters in AC Microgrids", IEEE
TRANSACTIONS ON POWER ELECTRONICS,
INSTITUTE OF ELECTRICAL AND
ELECTRONICS ENGINEERS, USA, vol. 27, no. 11,
1 November 2012 (2012-11-01), pages 4734 -
4749, XP011454774, ISSN: 0885-8993, DOI:
10.1109/TPEL.2012.2199334**
• **ZHU YIXIN ET AL: "An enhanced power sharing
strategy for droop controlled microgrids based
on consensus algorithm", IECON 2017 - 43RD
ANNUAL CONFERENCE OF THE IEEE
INDUSTRIAL ELECTRONICS SOCIETY, IEEE, 29
October 2017 (2017-10-29), pages 7724 - 7730,
XP033277209, DOI: 10.1109/IECON.2017.8217354**

## Description

### TECHNICAL FIELD

The invention relates to a method of managing power in an AC subgrid having a plurality of devices, to a device, which can be part of such an AC subgrid, and to such an AC-subgrid.

### BACKGROUND ART

Generally, the frequency in an AC subgrid or AC microgrid shall be kept in a predetermined range so as to ensure a proper function of the devices in such an AC subgrid or AC microgrid, for which a number of possibilities have been proposed. However, controlling power in AC subgrids is done differently to controlling power in DC subgrids, which DC subgrids are part of power distribution as well. So, there are different methods in the field to control power in the various grids what make things complicated and in particular complicates interoperability of different power grids. Rocabert, J., et al. (2012) "Control of Power Converters in AC Microgrids", IEEE Transactions on Power Electronics, 27, 4734-4749, DOI:10.1109/TPEL.20212.2199334 relates to power control in AC microgrids.

Zhu Yixin et al, "An enhanced power sharing strategy for droop controlled microgrids based on consensus algorithm", IECON 2017 - 43rd Annual Conference of the IEEE Industrial Electronics Society, pp. 7724-7730, DOI: 10.1109/IECON.2017.8217354 relates to power distribution in droop controlled microgrids.

### DISCLOSURE OF INVENTION

The invention refers to a method of managing power in an AC subgrid according to claim 1, and a corresponding device according to claim 8. Preferred embodiments are defined in the dependent claims.

Accordingly, an object of the invention is the provision of an AC subgrid, an improved device and an improved arrangement with such devices. In particular, power control shall be done in a more standardized or harmonized way.

The object of the invention is solved by a method of managing power in an AC subgrid with a plurality of devices, wherein at least some of the devices are part of a first group and form first group devices and wherein each one of the first group devices executes the steps of receiving virtual voltages from a plurality of other devices in the AC subgrid, wherein the virtual voltage received from a respective one of said other devices is indicative of a load situation in the AC subgrid at this one of said other devices,

- calculating a weighted average virtual voltage of the received virtual voltages,
- determining a droop current based on a droop curve and the weighted average virtual voltage,
- measuring the frequency in the AC subgrid,
- calculating a set current, which is based on the droop current being reduced if the measured frequency is high in relation to a target frequency and which is increased if the measured frequency is low in relation to the target frequency,
- setting the set current in a current control circuit in the one of the first group devices,
- determining an actual virtual voltage based on the droop curve and the set current and
- sending (in particular broadcasting) the actual virtual voltage to said other devices.

Moreover, the object of the invention is solved by a device, which comprises a processor, an I/O-interface, a frequency measuring module and a current control circuit, wherein
the I/O-interface is designed to receive virtual voltages from a plurality of other devices in an AC subgrid, wherein the virtual voltage received from a respective one of said other devices is indicative of a load situation in the AC subgrid at this one of said other devices,

- the processor is designed to calculate a weighted average virtual voltage of the received virtual voltages,
- the processor is designed to determine a droop current based on a droop curve and the weighted average virtual voltage,
- the frequency measuring module is designed to measure the frequency in the AC subgrid,
- the processor is designed to calculate a set current, which is based on the droop current and which is reduced if the measured frequency is high in relation to a target frequency and which is increased if the measured frequency is low in relation to the target frequency,
- the processor is designed to set the set current in the current control circuit,
- the processor is designed to determine an actual virtual voltage based on the droop curve and the set current and
- the I/O-interface is designed to send (in particular broadcast) the actual virtual voltage to said other devices.

Finally, the object of the invention is solved by an AC subgrid, which comprises a plurality of devices of the above kind, which are interconnected in terms of power and data communication.

By the proposed measures, a decentralized power control concept for an AC subgrid or AC microgrid is provided. In detail, the concept is based on a virtual voltage (in particular a virtual DC voltage), which is calculated in and populated to devices in the AC subgrid or AC microgrid to control power flow. In particular, the virtual voltage is calculated in and populated to all devices in the AC subgrid or AC microgrid. The control mechanism is similar to that of a DC subgrid or DC microgrid, but the proposed measures offer the possibility to control the frequency in the AC subgrid or AC microgrid and keep it in a predetermined range. So, power control can be done in a more standardized or harmonized way, and interoperability of different power grids is eased. In particular the proposed method is applicable in case of "soft" connections between an AC main grid and the AC subgrid or if the AC subgrid is in island mode and disconnected from an AC main grid.

It should be noted that the virtual voltages may be weighted equally in some embodiments. Accordingly, the weighted average virtual voltage becomes a "normal" virtual voltage then.

Generally, the devices in the AC subgrid may be divided into various groups, the meaning of which will be elucidated hereinafter and by reference to the dependent claims. First group devices are devices, which are capable to control the flow of power in both directions. That means that first group devices can draw power from and supply power into the AC subgrid. Second group devices are devices, which are capable to control how much power is drawn from the AC subgrid. Third group devices are devices, which have no power control capability but can send a virtual voltage according to a droop curve. Finally, there may be uncontrolled loads like lighting and so on.

In one embodiment, at least some of the devices belong to a second group being separate from the first group and form second group devices, wherein each one of the second group devices executes the steps of

- receiving virtual voltages from a plurality of other devices in the AC subgrid, wherein the virtual voltage received from a respective one of said other devices is indicative of a load situation in the AC subgrid at this one of said other devices,
- calculating a weighted average virtual voltage of the received virtual voltages,
- determining a set current based on a droop curve and the weighted average virtual voltage,
- setting the set current in a current control circuit in the one of the second group devices.

In yet one further embodiment, at least some of the devices belong to a third group being separate from the first group and the second group and form third group devices, wherein each one of the third group devices executes the steps of

- measuring a current flowing over an access point between the AC subgrid and an upstream AC main grid,
- determining an actual virtual voltage based on the droop curve and the measured current and
- sending (broadcasting) the actual virtual voltage to said other devices.

Further advantageous embodiments are disclosed in the claims and in the description as well as in the figures.

Beneficially, the droop current can be reduced or increased proportional to a deviation of the measured frequency from a target frequency to get the set current. For example, the current difference may be calculated by use of the formula

$$\Delta I = K \cdot (f_{target} - f)$$

wherein $\Delta I$ is the current difference, f is the measured frequency, $f_{target}$ is the target frequency and K is a factor. In other words, the droop current is reduced or increased proportional to a deviation of the measured frequency from the target frequency. However, in an alternative embodiment, the current difference may also be a fixed number.

In an advantageous embodiment, the droop current can be reduced if the measured frequency exceeds an upper threshold frequency and can be increased if the measured frequency is below a lower threshold frequency. The current difference, by which the droop current is reduced to get the set current may be a fixed number again, or the droop current can be reduced or increased proportional to a deviation of the measured frequency from a target frequency as outlined above.

It is of advantage if the droop curves and/or weighting factors are sent to said devices in the AC subgrid by a central controller. This can be done wirelessly but also by wire, in particular over the power lines of the AC subgrid. By these measures, power flow in the AC subgrid can be optimized, and also the frequency in the AC subgrid can be controlled. The droop curves and/or weighting factors can be determined by the central controller based on information from the devices in the AC subgrid, electric meters in the AC subgrid, historical data, weather data and/or planned future events. For example, power consumption changes over day and over seasons. Power consumption may also be influenced by future events like predicted weather and/or public events like football games. This information can be used to predict the power flow in the AC subgrid and to adjust or set droop curves and/or weighting factors accordingly. In particular, artificial intelligence and/or neuronal networks may be used for this job.

Advantageously, the droop curves and/or weighting factors are sent to said devices in the AC subgrid less frequently than the virtual voltages. For example the virtual voltages can be sent every 10 ms, whereas droop curves and/or weighting factors can be sent just twice an hour. In this way, a kind of hierarchical control is provided. In particular, power control via the virtual voltages may even function if the connection to the central controller is lost. In this case, the last valid droop curve or a default droop curve can be used in the devices for managing power flow in the AC subgrid.

BRIEF DESCRIPTION OF DRAWINGS

The invention now is described in more detail hereinafter with reference to particular embodiments, which the invention however is not limited to.

Fig. 1    shows an exemplary arrangement, comprising an AC main grid and an AC subgrid in schematic view;

Fig. 2    shows a process diagram with the steps being performed in a first group device;

Fig. 3    shows an exemplary droop curve and the determination of a droop current and an actual virtual voltage;

Fig. 4    a process diagram with the steps being performed when calculating the set current;

Fig. 5    shows a schematic view of an exemplary controller for a first group device;

Fig. 6    shows a process diagram with the steps being performed in a second group device and

Fig. 7    shows a process diagram with the steps being performed in a third group device.

DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure, and indication of the orientation and/or relative position has to be amended in different figures accordingly as the case may be.

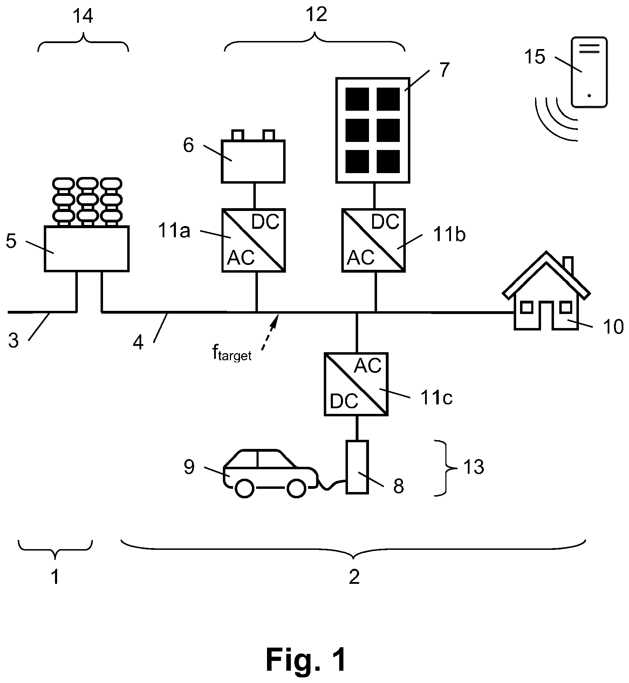

Fig. 1 shows an exemplary arrangement, comprising an AC main grid 1 and an AC subgrid 2. In detail, power lines 3 of the AC main grid 1 are coupled to power lines 4 of the AC subgrid 2 via the transformer 5. Moreover, the arrangement comprises a couple of devices connected to the power lines 4 of the AC subgrid 2. In detail, the arrangement comprises a battery 6, a solar module 7, a loading station 8 for an electric car 9 and a house 10. The battery 6, the solar module 7 and the loading station 8 are connected to the power lines 4 of the AC subgrid 2 by means of AC/DC-converters 11a..11c.

The battery 6, the solar module 7 are devices of a first group 12 and form first group devices, the loading station 8 is part of a second group 13 and forms a second group device, and the transformer 5 is part of a third group 14 and forms a third group device.

First group devices 6, 7 are devices, which are capable of controlling the flow of power in both directions. That means that first group devices 6, 7 can draw power from and supply power into the AC subgrid 2. Second group devices 8 are devices, which are capable to control how much power is drawn from the AC subgrid 2. However, it should be noted in this context that a loading station 8 may also be designed to draw power from the battery from the electric car 9 and to supply that power into the AC subgrid 2 in some embodiments. In that case, the loading station 8 would be a first group device. Third group devices 5 are devices, which have no power control capability but can send a virtual voltage according to a droop curve. Finally, there may be uncontrolled loads like lighting in the house 10 and so on.

One should note that the assignment of the devices 5..8 is exemplary and may be different in other embodiments. Further on, one should note that a group 12..14 may contain an arbitrary number of devices 5..8. So, in reality, the groups 12..14 may contain much more devices 5..8 than shown. This is particularly true for the second group 13 and the third group 14, which in this example each contain just one device 5, 8.

Further on, the arrangement shown in Fig. 1 comprises a central controller 15, the function of which is explained later. Finally, in Fig. 1 the target frequency $f_{target}$ is indicated, which is the desired frequency of an AC voltage and an AC current in the power lines 4 of the AC subgrid 2.

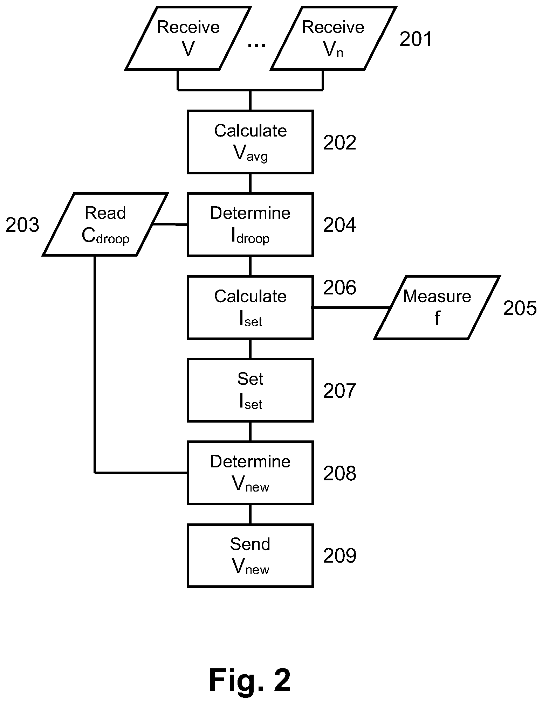

The function of the arrangement of Fig. 1 is now explained by additional use of Figs. 2 to 7:
The first group devices, which are the battery 6, the solar module 7 in this example, execute the following steps, which are illustrated in Fig. 2. The example is disclosed from the viewpoint of the battery 6. However, the solar module 7 does the same steps.

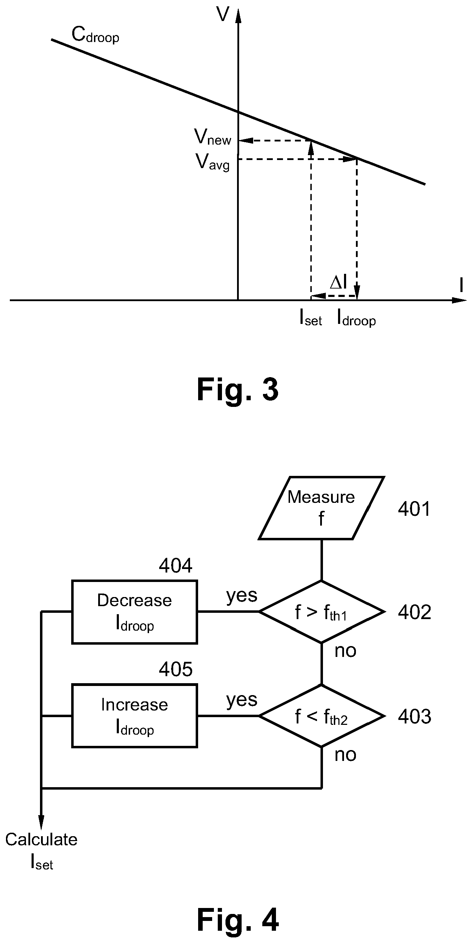

In a first step 201 virtual voltages $V..V_n$ are received from the of other devices in the AC subgrid 2, which are the transformer 5, the solar module 7 and the loading station 8 in this example. So, in detail, the battery 6 receives virtual voltages $V..V_n$ from three other devices 5, 7 and 8 in the first step 201 in this example. The virtual voltage $V..V_n$ received from a respective one of said other devices 5, 7 and 8 is indicative of a load situation in the AC subgrid 2 at this one of said other devices 5, 7 and 8. So, the virtual voltage $V$ received from the solar module 7 reflects the load situation of the AC subgrid 2 at the solar module 7 and so on. In a next step 202, a weighted average virtual voltage $V_{avg}$ of the received virtual voltages $V..V_n$ is calculated. For example, the virtual voltage $V$ from the transformer 5 may have the highest weighting factor, the virtual voltage $V$ from the solar module 7 the second highest weighting factor and the virtual voltage $V$ from the loading station 8 may have the lowest weighting factor. In a next step 203, a droop curve $C_{droop}$ is read and used for determining a droop current $I_{droop}$ based on the droop curve $C_{droop}$ and the average virtual voltage $V_{avg}$ in a step 204. This step 204 is also depicted in Fig. 3. In a next step 205, the frequency f in the AC subgrid 2 is measured. Based on that, a set current $I_{set}$ is calculated in step 206. In detail, the set current $I_{set}$ is based on the droop current $I_{droop}$, which is reduced if the measured frequency f is high in relation to a target frequency $f_{target}$ and which is increased if the measured frequency f is low in relation to the target frequency $f_{target}$.

Fig. 4 gives an example how this can be done. In step 401, which corresponds to step 205, the frequency f is measured. In a next step 402 there is a check whether the measured frequency f exceeds an upper threshold frequency $f_{th1}$. If this is the case, the droop current $I_{droop}$ is decreased in step 404. If this is not the case, there is a check whether the measured frequency f is below a lower threshold frequency $f_{th2}$. If this is the case, the droop current $I_{droop}$ is increased in step 405. If this is not the case, the droop current $I_{droop}$ is not changed. The result of this procedure is the set current $I_{set}$, which in detail can be the droop current $I_{droop}$, the reduced droop current $I_{droop}$ or the increased droop current $I_{droop}$. This step is indicated in Fig. 3 by means of the current difference $\Delta I$.

Generally the current difference $\Delta I$ may be a fixed number, or it may depend on the difference between the measured frequency f and the target frequency $f_{target}$. For example, the current difference $\Delta I$ may be calculated by use of the formula

$$\Delta I = K \cdot (f_{target} - f)$$

wherein K is a factor. In other words, the droop current $I_{droop}$ is reduced or increased proportional to a deviation of the measured frequency f from the target frequency $f_{target}$.

When threshold frequencies $f_{th1}$ and $f_{th2}$ are provided, there is a "dead band" around the target frequency $f_{target}$, in which no change of the droop current $I_{droop}$ is done what means that the set current $I_{set}$ is the droop current $I_{droop}$. In this way, a kind of a hysteresis is provided so as to stabilize the control algorithm and avoid fast oscillations. However, the threshold frequencies $f_{th1}$ and $f_{th2}$ are no necessary condition for the proposed method and may also be omitted.

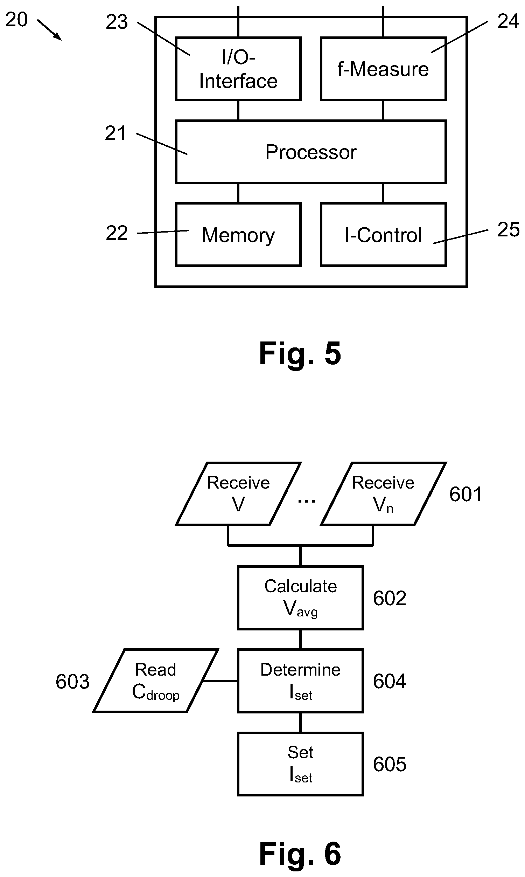

In a next step 207, the set current $I_{set}$ is set in a current control circuit in the battery 6 (see also the current control circuit 25 in Fig. 5). In detail, the current control circuit may be a power controller controlling whether the battery 6 is charged or discharged and how much it is charged or discharged. So, dependent on the set current $I_{set}$, power is drawn from or delivered into the AC subgrid 2. In a next step 208, an actual virtual voltage $V_{new}$ is determined based on the droop curve $C_{droop}$ and the set current $I_{set}$. This step 208 is also depicted in Fig. 3. In a step 209, finally the actual virtual voltage $V_{new}$ is sent (in particular broadcasted) to the devices 5, 7 and 8 in the AC subgrid 2, i.e. to the transformer 5, the solar module 7 and the loading station 8.

Generally, the first group devices 6, 7 each may comprise a controller. One embodiment of such a controller 20 is depicted in Fig. 5. The controller 20 comprises a processor 21, a memory 22, an I/O-Interface 23, a frequency measuring module 24 and a current control circuit 25. The processor 21 is provided to perform or control the steps 201..209 and 401..405 as the case may be. The memory 22 is provided for storing the program for performing the aforementioned steps 201..209 and 401..405 as well as for storing the droop curve $C_{droop}$. The I/O-Interface 23 is provided for receiving the virtual voltages $V..V_n$ from the of other devices 5, 7 and 8 in the AC subgrid 2 in step 201 and for sending the actual virtual voltage $V_{new}$ to said other devices 5, 7 and 8 in step 209. The frequency measuring module 24 is provided to measure the frequency f in the AC subgrid 2 in step 205 and 401. Finally, the current control circuit 25 is provided to control how much power is drawn from or delivered into the AC subgrid 2 dependent on the set current $I_{set}$.

Generally, the virtual voltages $V..V_n$ and the actual virtual voltage $V_{new}$ can be sent over the power lines 4 of the AC subgrid 2 by means of well-known power line communication. Accordingly, the plurality of devices 6, 7 can be interconnected in terms of power and data communication. Nevertheless, virtual voltages $V..V_n$ and the actual virtual voltage $V_{new}$ can be sent by use of other techniques, e.g. wirelessly. For example, the virtual voltages $V..V_n$ and the actual virtual voltage $V_{new}$ can be transmitted every 10 ms.

In one embodiment, the droop curves $C_{droop}$ and/or the weighting factors can be sent to the devices 5..8 by the central controller 15. In this example, this is done wirelessly, but it is also possible to send this information by wire, in particular over the power lines 3, 4. In this way power flow in the AC subgrid 2 can be optimized and also the frequency f in the AC subgrid 2 can be controlled. The droop curves $C_{droop}$ and/or weighting factors can be determined by the central controller 15 based on information from the devices 5..8, electric meters in the AC subgrid 2, historical data, weather data and/or planned future events. For example, power consumption changes over day and over seasons. Power consumption may also be influenced by future events like predicted weather and/or public events like football games. This information can be used to predict the power flow in the AC subgrid 2 and to adjust or set droop curves $C_{droop}$ and/or weighting factors accordingly. In particular, artificial intelligence and/or neuronal networks may be used for this job.

Beneficially, voltage droop curves $C_{droop}$ and/or weighting factors can be sent to the devices 5..8 less frequently than the actual virtual voltages $V_{new}$. For example the actual virtual voltages $V_{new}$ can be sent every 10 ms, whereas droop curves $C_{droop}$ and/or weighting factors can be sent just twice an hour. In this way, a kind of hierarchical control is provided. In particular, power control via the actual virtual voltages $V_{new}$ may even function if the connection to the central controller 15 is lost. In this case, the last valid droop curve $C_{droop}$ or a default droop curve $C_{droop}$ can be used in the devices 4..8 devices for managing power flow in the AC subgrid 2.

Fig. 6 now shows how the second group devices may work, in detail by reference to the loading station 8. Each of the second group devices performs the following steps. In a first step 601, virtual voltages $V..V_n$ from the of other devices in the AC subgrid 2 are received, which now are the transformer 5, the battery 6 and the solar module 7. The virtual voltage $V..V_n$ received from a respective one of said other devices 5..7 again is indicative of a load situation in the AC subgrid 2 at this one of said other devices 5..7. In a next step 602, a weighted average virtual voltage $V_{avg}$ of the received virtual voltages $V..V_n$ is calculated. The virtual voltage $V$ from the transformer 5 may have the highest weighting factor and the virtual voltage $V$ the battery 6 and from the solar module 7 may have the lower weighting factors. In a next step 603, a droop curve $C_{droop}$ is read and used for determining a set current $I_{set}$ based on the droop curve $C_{droop}$ and the average virtual voltage $V_{avg}$ in step 604. In a next step 605, the set current $I_{set}$ is set in a current control circuit 25 in the loading station 8. The set current $I_{set}$ defines how much power is drawn from the AC subgrid 2.

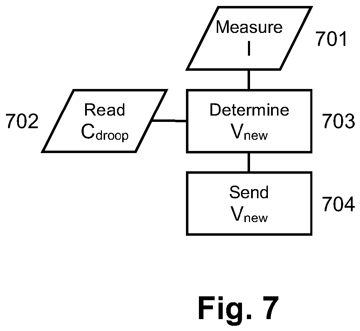

Fig. 7 finally shows how the third group devices may work, in detail by reference to the transformer 5. Each of the third group devices performs the following steps. In a first step 701, a current I flowing from the AC main grid 1 into the AC subgrid 2 or vice versa is measured. In a next step 702, a droop curve $C_{droop}$ is read and used for determining an actual virtual voltage $V_{new}$ based on the droop curve $C_{droop}$ and the measured current I in step 703. In a step 704, finally the actual virtual voltage $V_{new}$ is sent (in particular broadcasted) to the devices 6..8 in the AC subgrid 2, i.e. to the battery 6, the solar module 7 and the loading station 8.

It should be noted that reference signs in the claims should not be construed as limiting the scope of the claims.

LIST OF REFERENCE NUMERALS

| 1 | AC main grid |
|---|---|
| 2 | AC subgrid |
| 3 | power line in AC main grid |
| 4 | power line in AC subgrid |
| 5 | transformer |
| 6 | battery |
| 7 | solar module |
| 8 | loading station |
| 9 | car |
| 10 | house |
| 11a..11c | AC/DC-converter |
| 12 | first group |
| 13 | second group |
| 14 | third group |
| 15 | central controller |

| 20 | controller |
|---|---|
| 21 | processor |
| 22 | memory |
| 23 | I/O-interface |
| 24 | frequency measuring module |
| 25 | current control circuit |

| $C_{droop}$ | droop curve |
|---|---|
| f | frequency |
| $f_{target}$ | target frequency |
| $f_{th1}$ | upper threshold frequency |
| $f_{th2}$ | lower threshold frequency |
| $I_{droop}$ | droop current |
| $I_{set}$ | set current |
| $\Delta I$ | current difference |
| $V..V_n$ | virtual voltage |
| $V_{avg}$ | average virtual voltage |
| $V_{new}$ | actual virtual voltage |

**Claims**

1. Method of managing power in an AC subgrid (2) with a plurality of devices (5..8) wherein at least some of the devices (6, 7) are part of a first group (12) and form first group devices (6, 7), wherein each one of the first group devices (6, 7) executes the steps of receiving (201) virtual voltages $(V..V_n)$ from a plurality of other devices (5, 8) in the AC subgrid (2), wherein the virtual voltage $(V..V_n)$ received from a respective one of said other devices (5, 8) is indicative of a load situation in the AC subgrid (2) at this one of said other devices (5, 8),

    - measuring (205) a frequency (f) in the AC subgrid (2),

    **characterised in that**
    each one of the first group devices (6, 7) further executes the steps of:

    - calculating (202) a weighted average virtual voltage $(V_{avg})$ of the received virtual voltages $(V..V_n)$,
    - determining (204) a droop current $(I_{droop})$ based on a droop curve $(C_{droop})$ and the weighted average virtual voltage $(V_{avg})$,
    - calculating (206) a set current $(I_{set})$, which is based on the droop current $(I_{droop})$ being reduced if the measured frequency (f) is high in relation to a target frequency $(f_{target})$ and which is increased if the measured frequency (f) is low in relation to the target frequency $(f_{target})$,
    - setting (207) the set current $(I_{set})$ in a current control circuit (25) in the one of the first group devices (6, 7),
    - determining (208) an actual virtual voltage $(V_{new})$ based on the droop curve $(C_{droop})$ and the set current $(I_{set})$ and

- sending (209) the actual virtual voltage ($V_{new}$) to said other devices (5, 8).

2. Method as claimed in claim 1, **characterized in that** the droop current ($I_{droop}$) is reduced or increased proportional to a deviation of the measured frequency (f) from the target frequency ($f_{target}$).

3. Method as claimed in claim 1 or 2, **characterized in that** the droop current ($I_{droop}$) is reduced if the measured frequency (f) exceeds an upper threshold frequency ($f_{th1}$) and is increased if the measured frequency (f) is below a lower threshold frequency ($f_{th2}$).

4. Method as claimed in any one of claims 1 to 3, **characterized in that** at least some of the devices (8) belong to a second group (13) being separate from the first group (12) and form second group devices (8), wherein each one of the second group devices (8) executes the steps of

     - receiving (601) virtual voltages ($V..V_n$) from a plurality of other devices (5..7) in the AC subgrid (2), wherein the virtual voltage ($V..V_n$) received from a respective one of said other devices (5..7) is indicative of a load situation in the AC subgrid (2) at this one of said other devices (5..7),
     - calculating (602) a weighted average virtual voltage ($V_{avg}$) of the received virtual voltages ($V..V_n$),
     - determining (604) a set current ($I_{set}$) based on a droop curve ($C_{droop}$) and the weighted average virtual voltage ($V_{avg}$),
     - setting (605) the set current ($I_{set}$) in a current control circuit (25) in the one of the second group devices (8).

5. Method as claimed in any one of claims 1 to 4, **characterized in that** at least some of the devices (5) belong to a third group (14) being separate from the first group (12) and the second group (13) and form third group devices (5), wherein each one of the third group devices (5) executes the steps of

     - measuring (701) a current (I) flowing over an access point between the AC subgrid (2) and an upstream AC main grid (1),
     - determining (703) an actual virtual voltage ($V_{new}$) based on the droop curve ($C_{droop}$) and the measured current (I),
     - sending (704) the actual voltage ($V_{new}$) to said other devices (6..8).

6. Method as claimed in any one of claims 1 to 5, **characterized in that** droop curves ($C_{droop}$) and/or weighting factors are sent to the devices (5..8) by a central controller (15).

7. Method as claimed in claim 6, **characterized in that** voltage droop curves ($C_{droop}$) and/or weighting factors are sent to said devices (5..8) less frequently than the actual virtual voltages ($V_{new}$).

8. Device (6, 7), comprising a processor (21), an I/O-interface (23), a frequency measuring module (24) and a current control circuit (25), wherein the I/O-interface (23) is configured to receive virtual voltages ($V..V_n$) from a plurality of other devices (5, 8) in an AC subgrid (2), wherein the virtual voltage ($V..V_n$) received from a respective one of said other devices (5, 8) is indicative of a load situation in the AC subgrid (2) at this one of said other devices (5, 8),

     - the processor (21) is configured to calculate a weighted average virtual voltage ($V_{avg}$) of the received virtual voltages ($V..V_n$),
     - the processor (21) is configured to determine a droop current ($I_{droop}$) based on a droop curve ($C_{droop}$) and the weighted average virtual voltage ($V_{avg}$),
     - the frequency measuring module (23) is configured to measure the frequency (f) in the AC subgrid (2),
     - the processor (21) is configured to calculate a set current ($I_{set}$), which is based on the droop current ($I_{droop}$) and which is reduced if the measured frequency (f) is high in relation to a target frequency ($f_{target}$) and which is increased if the measured frequency (f) is low in relation to the target frequency ($f_{target}$),
     - the processor (21) is configured to set the set current ($I_{set}$) in the current control circuit (25),
     - the processor (21) is configured to determine an actual virtual voltage ($V_{new}$) based on the droop curve ($C_{droop}$) and the set current ($I_{set}$) and
     - the I/O-interface (23) is configured to send the actual virtual voltage ($V_{new}$) to said other devices (5, 8).

9. AC-subgrid (2), **characterized in** a plurality of devices (6, 7) according to claim 8, which are interconnected in terms of power and data communication.

**Patentansprüche**

1. Verfahren zur Verwaltung der Leistung in einem Wechselstromunternetz (2) mit einer Vielzahl von Vorrichtungen (5..8), wobei mindestens einige der Vorrichtungen (6, 7) Teil einer ersten Gruppe (12) sind und erste Gruppenvorrichtungen (6, 7) bilden, wobei jede der ersten Gruppenvorrichtungen (6, 7) die folgenden Schritte ausführt:
Empfangen (201) virtueller Spannungen ($V..V_n$) von

einer Vielzahl anderer Vorrichtungen (5, 8) in dem Wechselstromunternetz (2), wobei die von einer jeweiligen der anderen Vorrichtungen (5, 8) empfangene virtuelle Spannung (V..V$_n$) indikativ für eine Lastsituation in dem Wechselstromunternetz (2) bei dieser einen der anderen Vorrichtungen (5, 8) ist,

- Messen (205) einer Frequenz (f) im Wechselstromunternetz (2),

**dadurch gekennzeichnet, dass**
jede der ersten Gruppenvorrichtungen (6, 7) ferner die folgenden Schritte ausführt:

- Berechnen (202) einer gewichteten durchschnittlichen virtuellen Spannung (V$_{avg}$) der empfangenen virtuellen Spannungen (V..V$_n$),
- Bestimmen (204) eines Droop-Stroms (I$_{droop}$) basierend auf einer Droop-Kurve (C$_{droop}$) und der gewichteten durchschnittlichen virtuellen Spannung (V$_{avg}$),
- Berechnen (206) eines festgelegten Stroms (I$_{set}$), der darauf basiert, dass der Droop-Strom (I$_{droop}$) reduziert wird, wenn die gemessene Frequenz (f) hoch in Bezug auf eine Zielfrequenz (f$_{target}$) ist, und der erhöht wird, wenn die gemessene Frequenz (f) niedrig in Bezug auf die Zielfrequenz (f$_{target}$) ist,
- Festlegen (207) des festgelegten Stroms (I$_{set}$) in einer Stromsteuereinheit (25) in der einen der ersten Gruppenvorrichtungen (6, 7),
- Bestimmen (208) einer tatsächlichen virtuellen Spannung (V$_{new}$) basierend auf der Droop-Kurve (C$_{droop}$) und dem festgelegten Strom (I$_{set}$) und
- Senden (209) der tatsächlichen virtuellen Spannung (V$_{new}$) an die anderen Vorrichtungen (5, 8).

2. Verfahren nach Anspruch 1, **dadurch gekennzeichnet, dass** der Droop-Strom (I$_{droop}$) proportional zu einer Abweichung der gemessenen Frequenz (f) von der Zielfrequenz (f$_{arger}$) verringert oder erhöht wird.

3. Verfahren nach Anspruch 1 oder 2, **dadurch gekennzeichnet, dass** der Droop-Strom (I$_{droop}$) verringert wird, wenn die gemessene Frequenz (f) eine obere Schwellenfrequenz (f$_{th1}$) überschreitet, und erhöht wird, wenn die gemessene Frequenz (f) unter einer unteren Schwellenfrequenz (f$_{th2}$) liegt.

4. Verfahren nach einem der Ansprüche 1 bis 3, **dadurch gekennzeichnet, dass** mindestens einige der Vorrichtungen (8) zu einer zweiten Gruppe (13) gehören, die von der ersten Gruppe (12) getrennt ist und zweite Gruppenvorrichtungen (8) bilden, wobei jede der zweiten Gruppenvorrichtungen (8) die folgenden Schritte ausführt:

- Empfangen (601) virtueller Spannungen (V..V$_n$) von einer Vielzahl anderer Vorrichtungen (5..7) in dem Wechselstromunternetz (2), wobei die von einer jeweiligen der anderen Vorrichtungen (5..7) empfangene virtuelle Spannung (V..V$_n$) indikativ für eine Lastsituation in dem Wechselstromunternetz (2) bei dieser einen der anderen Vorrichtungen (5..7) ist,
- Berechnen (602) einer gewichteten durchschnittlichen virtuellen Spannung (V$_{avg}$) der empfangenen virtuellen Spannungen (V..V$_n$),
- Bestimmen (604) eines festgelegten Stroms (I$_{set}$) basierend auf einer Droop-Kurve (C$_{droop}$) und der gewichteten durchschnittlichen virtuellen Spannung (V$_{avg}$),
- Festlegen (605) des festgelegten Stroms (I$_{set}$) in einer Stromsteuerschaltung (25) in der einen der zweiten Gruppenvorrichtungen (8).

5. Verfahren nach einem der Ansprüche 1 bis 4, **dadurch gekennzeichnet, dass** mindestens einige der Vorrichtungen (5) zu einer dritten Gruppe (14) gehören, die von der ersten Gruppe (12) und der zweiten Gruppe (13) getrennt ist und dritte Gruppenvorrichtungen (5) bilden, wobei jede der dritten Gruppenvorrichtungen (5) die folgenden Schritte ausführt:

- Messen (701) eines Stroms (I), der über einen Zugangspunkt zwischen dem Wechselstromunternetz (2) und einem vorgeschalteten Wechselstromhauptnetz (1) fließt,
- Bestimmen (703) einer tatsächlichen virtuellen Spannung (V$_{new}$) basierend auf der Droop-Kurve (C$_{droop}$) und dem gemessenen Strom (I),
- Senden (704) der tatsächlichen Spannung (V$_{new}$) an die anderen Vorrichtungen (6..8).

6. Verfahren nach einem der Ansprüche 1 bis 5, **dadurch gekennzeichnet, dass** von einer zentralen Steuerung (15) Dropp-Kurven (C$_{droop}$) und/oder Gewichtungsfaktoren an die Vorrichtungen (5..8) gesendet werden.

7. Verfahren nach Anspruch 6, **dadurch gekennzeichnet, dass** Droop-Kurven (C$_{droop}$) und/oder Gewichtungsfaktoren weniger häufig an die Vorrichtungen (5..8) gesendet werden als die tatsächlichen virtuellen Spannungen (V$_{new}$).

8. Vorrichtung (6, 7), umfassend einen Prozessor (21), eine I/O-Schnittstelle (23), ein Frequenzmessmodul (24) und eine Stromsteuerschaltung (25), wobei die I/O-Schnittstelle (23) konfiguriert ist, um virtuelle Spannungen (V..V$_n$) von einer Vielzahl anderer Vorrichtungen (5, 8) in einem Wechselstromunternetz (2) zu empfangen, wobei die von einer jeweiligen der anderen Vorrichtungen (5, 8) empfangene virtuelle Spannung (V..V$_n$) indikativ für eine Lastsituation im Wechselstromunternetz (2) an dieser einen der anderen Vorrichtungen (5, 8) ist,

- der Prozessor (21) konfiguriert ist, um eine gewichtete durchschnittliche virtuelle Spannung (V$_{avg}$) der empfangenen virtuellen Spannungen (V..V$_n$) zu berechnen,
- der Prozessor (21) konfiguriert ist, um einen Droop-Strom (I$_{droop}$) basierend auf einer Droop-Kurve (C$_{droop}$) und der gewichteten durchschnittlichen virtuellen Spannung (V$_{avg}$) zu bestimmen,
- das Frequenzmessmodul (23) konfiguriert ist, um die Frequenz (f) im Wechselstromunternetz (2) zu messen,
- der Prozessor (21) konfiguriert ist, um einen festgelegten Strom (I$_{set}$) zu berechnen, der auf dem Droop-Strom (I$_{droop}$) basiert und der reduziert wird, wenn die gemessene Frequenz (f) hoch in Bezug auf eine Zielfrequenz (f$_{target}$) ist, und der erhöht wird, wenn die gemessene Frequenz (f) niedrig in Bezug auf die Zielfrequenz (f$_{target}$) ist,
- der Prozessor (21) konfiguriert ist, um den festgelegten Strom (I$_{set}$) in der Stromsteuerschaltung (25) einzustellen,
- der Prozessor (21) konfiguriert ist, um basierend auf der Droop-Kurve (C$_{droop}$) und dem festgelegten Strom (I$_{set}$) eine tatsächliche virtuelle Spannung (V$_{new}$) zu bestimmen, und
- die E/A-Schnittstelle (23) konfiguriert ist, um die tatsächliche virtuelle Spannung (V$_{new}$) an die anderen Vorrichtungen (5, 8) zu senden.

9. Wechselstromunternetz (2), **gekennzeichnet durch** eine Vielzahl von Vorrichtungen (6, 7) nach Anspruch 8, die leistungs- und datenkommunikationsmäßig miteinander verbunden sind.

**Revendications**

1. Procédé de gestion d'énergie dans un sous-réseau CA (2) avec une pluralité de dispositifs (5..8), dans lequel au moins certains des dispositifs (6, 7) font partie d'un premier groupe (12) et forment des dispositifs de premier groupe (6, 7), dans lequel chacun des dispositifs de premier groupe (6, 7) exécute les étapes suivantes :
la réception (201) de tensions virtuelles (V..V$_n$) à partir d'une pluralité d'autres dispositifs (5, 8) dans le sous-réseau CA (2), dans lequel la tension virtuelle (V..V$_n$) reçue en provenance d'un dispositif respectif parmi lesdits autres dispositifs (5, 8) indique une situation de charge dans le sous-réseau CA (2) au niveau de ce dispositif parmi lesdits autres dispositifs (5, 8),

- la mesure (205) d'une fréquence (f) dans le sous-réseau CA (2),

**caractérisé en ce que**
chacun des dispositifs de premier groupe (6, 7) exécute en outre les étapes de :

- calcul (202) d'une tension virtuelle moyenne pondérée (V$_{avg}$) des tensions virtuelles reçues (V..V$_n$),
- détermination (204) d'un statisme en courant (I$_{droop}$) sur la base d'une courbe de statisme (C$_{droop}$) et de la tension virtuelle moyenne pondérée (V$_{avg}$),
- calcul (206) d'un courant de consigne(I$_{set}$), basé sur le statisme en courant (I$_{droop}$) qui est réduit si la fréquence mesurée (f) est élevée par rapport à une fréquence cible (f$_{target}$) et qui est augmenté si la fréquence mesurée (f) est faible par rapport à la fréquence cible (f$_{target}$),
- réglage (207) du courant de consigne (I$_{set}$) dans un circuit de contrôle de courant (25) dans le dispositif parmi les dispositifs de premier groupe (6, 7),
- détermination (208) d'une tension virtuelle réelle (V$_{new}$) sur la base de la courbe de statisme (C$_{droop}$) et du courant de consigne (I$_{set}$) et
- envoi (209) de la tension virtuelle réelle (V$_{new}$) auxdits autres dispositifs (5, 8).

2. Procédé selon la revendication 1, **caractérisé en ce que** le statisme en courant (I$_{droop}$) est réduit ou augmenté proportionnellement à un écart de la fréquence mesurée (f) par rapport à la fréquence cible (f$_{target}$).

3. Procédé selon la revendication 1 ou 2, **caractérisé en ce que** le statisme en courant (I$_{droop}$) est réduit si la fréquence mesurée (f) dépasse une fréquence seuil supérieure (f$_{th1}$) et est augmenté si la fréquence mesurée (f) est inférieure à une fréquence seuil inférieure (f$_{th2}$).

4. Procédé selon l'une quelconque des revendications 1 à 3, **caractérisé en ce qu'**au moins certains des dispositifs (8) appartiennent à un deuxième groupe (13) distinct du premier groupe (12) et forment des dispositifs de deuxième groupe (8), dans lequel chacun des dispositifs de deuxième groupe (8) exécute les étapes suivantes :

- la réception (601) de tensions virtuelles (V..V$_n$) à partir d'une pluralité d'autres dispositifs (5..7) dans le sous-réseau CA (2), dans lequel la tension virtuelle (V..V$_n$) reçue en provenance d'un dispositif respectif parmi lesdits autres dispositifs (5..7) indique une situation de charge dans le sous-réseau CA (2) au niveau de ce dispositif parmi lesdits autres dispositifs (5..7),

- le calcul (602) d'une tension virtuelle moyenne pondérée ($V_{avg}$) des tensions virtuelles reçues ($V..V_n$),
- la détermination (604) d'un courant de consigne ($I_{set}$) sur la base d'une courbe de statisme ($C_{droop}$) et de la tension virtuelle moyenne pondérée ($V_{avg}$),
- le réglage (605) du courant de consigne ($I_{set}$) dans un circuit de contrôle de courant (25) dans le dispositif parmi les dispositifs de deuxième groupe (8).

5. Procédé selon l'une quelconque des revendications 1 à 4, **caractérisé en ce qu'**au moins certains des dispositifs (5) appartiennent à un troisième groupe (14) distinct du premier groupe (12) et du deuxième groupe (13) et forment des dispositifs de troisième groupe (5), dans lequel chacun des dispositifs de troisième groupe (5) exécute les étapes suivantes :

- la mesure (701) d'un courant (I) circulant sur un point d'accès entre le sous-réseau CA (2) et un réseau principal CA (1) en amont,
- la détermination (703) d'une tension virtuelle réelle ($V_{new}$) sur la base de la courbe de statisme ($C_{droop}$) et du courant mesuré (I),
- l'envoi (704) de la tension réelle ($V_{new}$) auxdits autres dispositifs (6..8).

6. Procédé selon l'une quelconque des revendications 1 à 5, **caractérisé en ce que** les courbes de statisme ($C_{droop}$) et/ou les facteurs de pondération sont envoyés aux dispositifs (5..8) par un contrôleur central (15).

7. Procédé selon la revendication 6, **caractérisé en ce que** les courbes de statisme en tension ($C_{droop}$) et/ou les facteurs de pondération sont envoyés auxdits dispositifs (5..8) moins fréquemment que les tensions virtuelles réelles ($V_{new}$).

8. Dispositif (6, 7) comprenant un processeur (21), une interface E/S (23), un module de mesure de fréquence (24) et un circuit de contrôle de courant (25), dans lequel :
l'interface E/S (23) est configurée pour recevoir des tensions virtuelles ($V..V_n$) en provenance d'une pluralité d'autres dispositifs (5, 8) dans un sous-réseau CA (2), dans lequel la tension virtuelle ($V..V_n$) reçue en provenance d'un dispositif respectif parmi lesdits autres dispositifs (5, 8) indique une situation de charge dans le sous-réseau CA (2) au niveau de ce dispositif parmi lesdits autres dispositifs (5, 8),

- le processeur (21) est configuré pour calculer une tension virtuelle moyenne pondérée ($V_{avg}$) des tensions virtuelles reçues ($V..V_n$),
- le processeur (21) est configuré pour déterminer un statisme en courant ($I_{droop}$) sur la base d'une courbe de statisme ($C_{droop}$) et de la tension virtuelle moyenne pondérée ($V_{avg}$),
- le module de mesure de fréquence (23) est configuré pour mesurer la fréquence (f) dans le sous-réseau CA (2),
- le processeur (21) est configuré pour calculer un courant de consigne ($I_{set}$), qui est basé sur le statisme en courant ($I_{droop}$) et qui est réduit si la fréquence mesurée (f) est élevée par rapport à une fréquence cible ($f_{target}$) et qui est augmenté si la fréquence mesurée (f) est faible par rapport à la fréquence cible ($f_{target}$),
- le processeur (21) est configuré pour régler le courant de consigne ($I_{set}$) dans le circuit de contrôle de courant (25),
- le processeur (21) est configuré pour déterminer une tension virtuelle réelle ($V_{new}$) sur la base de la courbe de statisme ($C_{droop}$) et du courant de consigne ($I_{set}$) et
- l'interface E/S (23) est configurée pour envoyer la tension virtuelle réelle ($V_{new}$) auxdits autres dispositifs (5, 8).

9. Sous-réseau CA (2), **caractérisé par** une pluralité de dispositifs (6, 7) selon la revendication 8, qui sont interconnectés en termes de puissance et de communication de données.

**Fig. 1**

**Fig. 2**

**Fig. 3**

**Fig. 4**

**Fig. 5**

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROCABERT, J. et al.** Control of Power Converters in AC Microgrids. *IEEE Transactions on Power Electronics*, 2012, vol. 27, 4734-4749

- **ZHU YIXIN et al.** An enhanced power sharing strategy for droop controlled microgrids based on consensus algorithm. *IECON 2017 - 43rd Annual Conference of the IEEE Industrial Electronics Society*, 7724-7730